# EUROPÄISCHE PATENTSCHRIFT

(11) **EP 2 857 241 B1**
(45) Veröffentlichungstag und Bekanntmachung des Hinweises auf die Patenterteilung: **29.07.2020**
(21) Anmeldenummer: 13187555.1
(22) Anmeldetag: 07.10.2013
(51) Int. Cl.: B60J 7/00

(54) **Sonnenschutzrollo aus flexiblem Material für Fahrzeugdach**
Roller sunshade with flexible material for vehicle roof part
Pare-soleil à enrouleur au matériel flexible pour toit de véhicule

(43) Veröffentlichungstag der Anmeldung: 08.04.2015
(73) Patentinhaber: MAGNA STEYR Engineering AG & Co KG, 8041 Graz (AT); Magna Car Top Systems GmbH, 74321 Bietigheim-Bissingen (DE)
(72) Erfinder: Erlacher, Manuel, 9545 Radenthein (AT); Klein, Berthold, 74343 Sachsenheim (DE); Passegger, Wolfgang, 8430 Tillmitsch (AT); Zachnegger, Harald, 8041 Graz (AT); Zehnder, Frank, 71282 Hemmingen (DE)
(74) Vertreter: Zangger, Bernd

(56) Entgegenhaltungen:
- EP-A2- 1 495 889
- DE-A1-102007 032 079
- FR-A1- 2 927 570
- FR-A1- 2 967 941
- JP-A- 2007 131 208
- JP-U- S62 198 126
- JP-U- S63 155 720

## Beschreibung

Die Erfindung geht aus von einem flexiblen Sonnenschutzsystem, bestehend aus einem in einem Fahrzeugdach befindlichen Dachelement und einen unterhalb des Dachelements angeordneten Sonnenrollo, wobei das Fahrzeugdach zumindest Längsschienen für das Sonnenrollo aufweist und das Sonnenrollo in Richtung der Fahrzeuglängsachse verschiebbar ist.

### Stand der Technik

Bei der bekannten Vorrichtung wird das Rollotuch nach dessen Abwicklung in einer Ebene aufgespannt, die sich einerseits in Abwickelrichtung und andererseits quer zur Abwickelrichtung zwischen den seitlichen parallelen Längsschienen erstreckt.
Nachteilig ist bei der bekannten Rollovorrichtung, dass dem abgewickelten Rollotuch konstruktionsbedingt keine Krümmung quer zur Abwickelrichtung verliehen werden kann. Gerade bei großen transparenten Dachelementen, die auch eine starke Wölbung oder andere komplexere Kontouren aufweisen führt die ebene Aufspannung eines Sonnenrollos dazu, dass sie Kopffreiheit deutlich eingeschränkt ist.

Die JP S62 198126 U und die JP 2007 131 208 A offenbaren jeweils ein Sonnenschutzrollo mit einer mittigen Führungseinrichtung.

Die EP 1 495 889 zeigt ein Fahrzeugdach mit einer mit mindestens einem Funktionselement versehenen, in Dachquerrichtung verlaufenden Quertraverse, die an jeder Seite in einer Führung in Dachlängsrichtung verschiebbar geführt ist. An dem Fahrzeugdach kann eine Mittelkonsole vorgesehen sein, die seitlich an je einer Führung geführt ist.

DE202005011290U1 zeigt eine Rollovorrichtung, die eine Verstärkungsstrebe enthält, um damit eine gewisse Krümmung des Rollos vorzugeben. Allerdings kann mit einem solchen Sonnenrollo nur ein kleines Dachelement überspannt werden für größerer und komplexeren Ausgestaltungen ist die Lösung nicht geeignet.
Es ist daher Aufgabe der Erfindung einen Sonnenschutz vorzuschlagen, der den Konturen des Dachelements folgen kann, auch wenn dieses sehr groß und komplex gestaltet ausgebildet ist.

Die Aufgabe wird gelöst mit einem flexiblen Sonnenschutzsystem bestehend aus einem in einem Fahrzeugdach befindlichen Dachelement und einem unterhalb des Dachelements angeordneten Sonnenrollo. Dabei weist das Fahrzeugdach zumindest Längsschienen für das Sonnenrollo auf, das in Richtung der Fahrzeuglängsachse verschiebbar ist und das Sonnenschutzsystem weist zwischen den Längsschienen mindestens eine zusätzliche Führungsvorrichtung entlang der Längsachse des Fahrzeugs auf.

Erfindungsgemäß besteht die zusätzliche Führungsvorrichtung aus mindestens einer metallisierten und/oder metallischen Bahn und Magneten. Durch den Einsatz von metallischen Materialien und Magneten ist es auf einfache Weise möglich eine Verbindung zwischen Dachelement und Sonnenrollo herzustellen und so eine zusätzliche Führung zu erreichen.

Durch die Führung des Sonnenrollos in den Längsschienen sowie durch die zusätzliche Führungsvorrichtung, ist es möglich das Sonnenrollo an die Form des Dachelementes optimal heranzuführen.

Vorteilhafte Ausführungsformen sind dadurch bestimmt, dass die metallische Bahn aus einem eingearbeiteten Metallstreifen oder einer aufgebrachten Metallschicht besteht, wobei die Metallbahn sich entweder im Dachelement oder im Sonnenrollo befindet.
Dadurch sind die Magneten auch entweder im Dachelement oder im Sonnenrollo angebracht.
Vorteilhafterweise sind die zusätzlichen Führungsvorrichtungen so angebracht, dass die Form des Sonnenrollos mindestens teilweise der Form des Dachelements entspricht.

Es ist von Vorteil, dass das flexible Sonnenschutzsystem sowohl für Dachelemente aus Glas als auch für verschiebbare Verdecke mit integrierten transparenten Flächen einsetzbar ist.
Weiterhin ist es von Vorteil, dass das Sonnenrollo einen transparenten Einsatz aufweist, so dass der Fahrer auch bei eingesetztem Sonnenrollo eine freie Sicht durch die Rückscheibe hat.
Vorteilhafterweise wird das Sonnenrollo im offenen Zustand auf einer Rolle auf gewickelt.
Es ist weiterhin von Vorteil, dass das Sonnenrollo mindestens eine Spange aufweist, die am frontscheibenseitigen Ende angebracht ist und in den Längsschienen geführt wird.
Es ist weiterhin von Vorteil, dass das flexible Sonnenschutzsystem manuell und/oder automatisch, vorzugsweise elektrisch, bedienbar gestaltet werden kann.
Vorteilhafterweise wird eine Beschichtung aufgebracht, die den Gleitwiderstand zwischen Sonnenrollo und Dachelement minimiert.

### Beschreibung der Erfindung

Die Erfindung wird nachfolgend beispielhaft unter Bezugnahme auf die beigefügte Zeichnung beschrieben.
Fig. 1 zeigt eine schematische Darstellung der beispielhaften Ausführungsform,
Fig. 2a und b zeigen schematisch ein Sonnenrollo im Stand der Technik und nach der Erfindung,
Fig. 3 zeigt eine Ausführungsform der Erfindung,
Figur 4 a und 4b zeigen Varianten,
Fig. 5 zeigt die Spangen und Längsschienen in einer weiteren vorteilhaften Ausführungsform,
Figur 6 zeigt ein Detail einer Ausführungsform,
Fig. 7 zeigt einen Ausschnitt des Sonnenrollos.

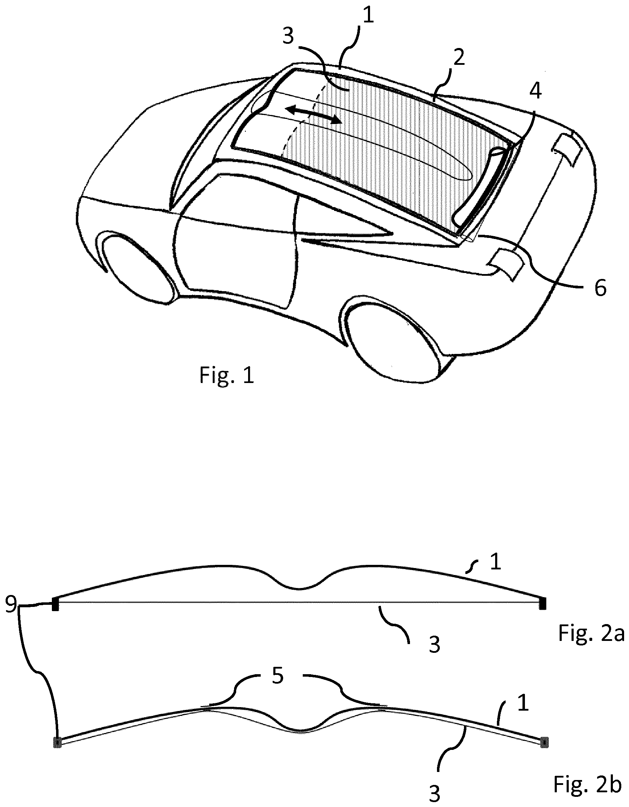

Figur 1 zeigt ein beispielhaftes Fahrzeug mit einem Fahrzeugdach 2, das sich im gezeigten Beispiel von der Oberkante der Windschutzscheibe bis zur Gürtellinie des Fahrzeugs heckseitig erstreckt. Innerhalb des Fahrzeugdaches ist ein Dachelement 1 eingezeichnet, das transparent gestaltet ist oder auch nur teilweise transparente Flächen aufweisen kann. Das Dachelement ist im einfachsten Fall ein Glasdach, das als starres Glasdach aufgebaut ist oder auch verschiebbare Teilelemente aufweist. In einer weiteren Ausgestaltung ist das Dachelement ein verschiebbares Verdeck, wobei der Verdeckstoff entlang der Fahrzeuglängsachse verschoben wird. Bei einem Verdeck ist es möglich, in den Verdeckstoff transparente Elemente einzuarbeiten, so dass auch hier die Anwendung eines Sonnenschutzes sinnvoll ist. In einer vorteilhaften Ausgestaltung der Erfindung besitzt der Verdeckstoff eine gewisse Elastizität und ist somit dehnbar, um sich der Kontur bzw. Form des Dachelementes 1 anpassen zu können.

Das Sonnenrollo 3 ist im Ausführungsbeispiel schon leicht in Richtung Fahrzeug Heck verschoben dargestellt. Das Sonnenrollo 3 enthält einen transparenten Bereich 4 der heckseitig in den Stoff des Sonnenrollos eingearbeitet ist. Entlang der heckseitigen Kante des Sonnenrollos ist eine Rolle 6 angedeutet, auf die der Stoff des Sonnenrollos aufgerollt wird.

Die Figuren 2a und 2b zeigen beispielhaft, wie ein Sonnenrollo in einem Fahrzeug aufgespannt ist. In Figur 2a ist das Dachelement 1 zu erkennen, das in diesem Beispiel mit einer Eindellung entlang der Mittelachse des Fahrzeugs ausgebildet ist. Es handelt sich hier lediglich um eine beispielhafte Form, im Normalfall und im Fall eines Faltverdecks wäre ein solches Fahrzeugdach einfach konkav gewölbt. Das Sonnenrollo 3 ist in Längsschienen 9 entlang des Fahrzeugdaches 2 geführt. Der Stoff spannt sich über den gesamten Innenraum des Fahrzeugs in einer Ebene zwischen den Längsschienen. Es ist deutlich zu erkennen, dass dadurch die Kopffreiheit im Innenraum reduziert ist.
In Figur 2b ist die erfindungsgemäße Lösung skizziert. Auch hier wird ein Dachelement 1 dargestellt, das eine ungewöhnliche Form aufweist. An zwei Positionen sind Magnetmodule 5 zu erkennen, mittels derer der Stoff des Sonnenrollos 3 am Dachelement 1 haftet bzw. angebracht ist. Durch die magnetische Verbindung zwischen Dachelement und Sonnenrollo an ausgewählten Positionen kann das Sonnenrollo der Kontur des Dachelements folgen.
Die Anzahl der Magnetmodule ist dabei von der Form des Dachelementes abhängig. In einem einfachen konkav gewölbten Dachelement kann eine Position, d.h. eine zusätzliche Führungsvorrichtung genügen. Bei anderen Dachformen sind zwei oder mehr Führungsvorrichtungen mit Magnetmodulen notwendig.

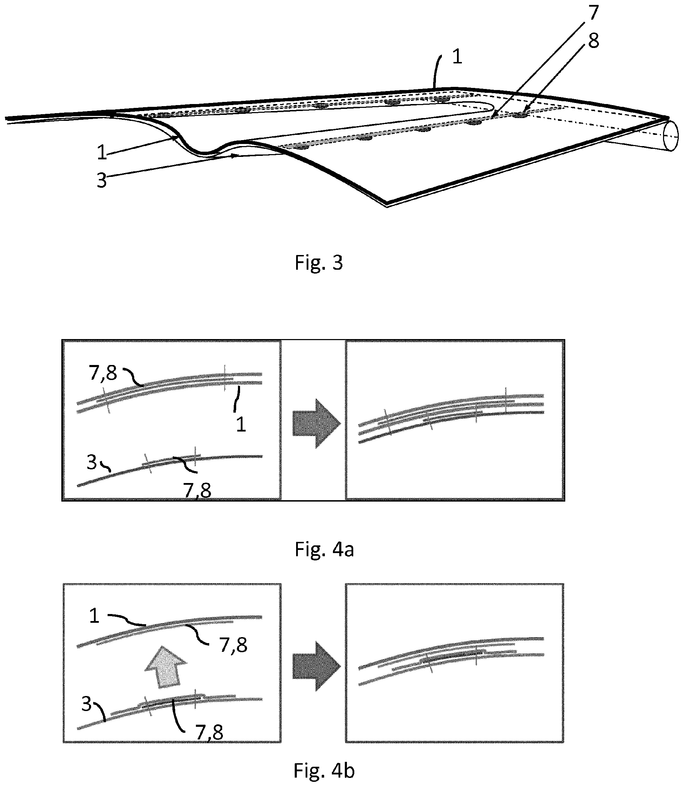

In Figur 3 ist eine beispielhafte Ausführungsform dargestellt. Das Dachelement 1 und das Sonnenrollo 3 erstrecken sich über das gesamte Fahrzeugdach. Entlang der Längsrichtung des Fahrzeugs sind in diesem Beispiel entlang des Dachelements metallische Bahnen 7 angebracht. Die metallischen Bahnen 7 können bei Verwendung eines Panoramaglasdaches aus einer metallisierten Schicht auf oder im Glas bestehen. Bei Verwendung von Verdeckstoff als Dachelement ist die metallische Bahn mit eingenähten Metallstreifen realisiert. Das Sonnenrollo 3 weist Magnete 8 auf, die in Abstände von einander in den Stoff des Rollos eingearbeitet sind. Die Magnete können auf den Stoff aufgeklebt sein oder in taschenförmigen Ausbuchtungen eingenäht werden.
Figur 4a zeigt ein Beispiel mit einem Dachelement, das aus einem Verdeckstoff besteht. In den Verdeckstoff sind Metallstreifen 7 eingearbeitet. Das Sonnenrollo 3 weist Magnete 8, die sich dann wie im rechten Teil der Figur dargestellt, mit dem metallischen Streifen verbinden. Die Figur 4a kann aber auch so ausgelegt werden, dass in den Verdeckstoff des Dachelementes ein eingenähter Magnetstreifen 8 vorhanden ist und sich auf der Seite des Sonnenrollos 3 entweder ein Metallstreifen 7 oder eine streifenförmige metallische Beschichtung findet.
In Figur 4b ist ein Beispiel gezeigt, bei dem das Dachelement 1 ein Glaselement ist. Auf das Glaselement wird ein metallischer Streifen 7 aufgedampft. Das Sonnenrollo 3 weist Magnete 8 auf, die in diesem Beispiel im Stoff eingenäht sind.

Auch im Beispiel eines Glasdaches ist es möglich die Beschichtung des Glasdaches als magnetische Schicht auszulegen und den metallischen Streifen im Sonnenrollo zu integrieren.
Beim Einsatz eines Glasdaches ist auch die Integration von metallischen Streifen oder magnetischen Strukturen in das Glas des Daches denkbar.
Für die Ausführung der Erfindung bestimmt die Größe des Sonnenschutzes auch die Auslegung, wo Magnete und Metallstreifen aufgebracht werden.
Wenn Magnete in das Sonnenrollo eingebaut sind, ist es wichtig, die Abstände so zu gestalten, dass sich die Magnete auf der Rolle 6 ohne allzu große Abstoßungen oder Anziehungen aufrollen lassen.

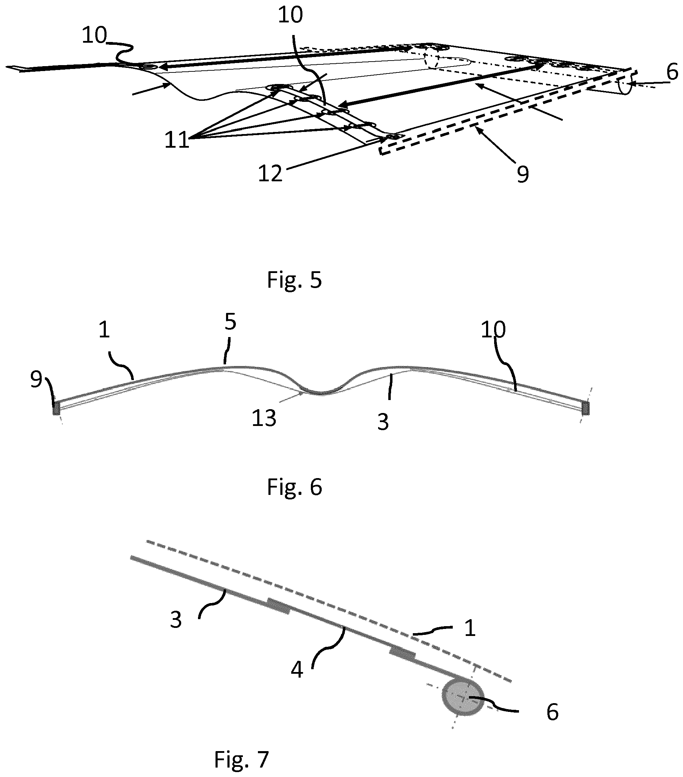

In Figur 5 wird die erfindungsgemäße Lösung vorgestellt, die den Spriegel eines Sonnenrollos im Stand der Technik ersetzt. Das Sonnenrollo 3 ist über Anbindungen 11 mit einer Spange 10 verbunden. Die Spange 10 erstreckt sich senkrecht von einer Längsschiene 9 die sich entlang des Fahrzeugdaches erstreckt, in Richtung Fahrzeug Mitte. Im gewählten Beispiel sind links und rechts Spangen 10 angebracht. Die Spangen 10 enden in einer Befestigung 12 an der ein Gleiter befestigt ist, der in der Längsschiene 9 beweglich ist. Die Spangen 10 erstrecken sich bis zu den Magnetmodulen, die aus metallischen Bahnen und Magneten bestehen. In Figur 6 ist ein Querschnitt durch die Ausführungsform nach Figur 5 mit den Spangen 10 dargestellt. Um die Gleitreibung des Sonnenrollos auf dem Dachelement 1 zu minimieren, wird das Dachelement 1 am Auflagepunkt des Sonnenrollos 3 mit einer Beschichtung 13 versehen.
In Figur 7 ist ein Querschnitt durch das Sonnenschutzsystem gezeigt. Das Sonnenrollo 3 weist einen transparenten Bereich 4 auf, durch den der Fahrer bei zugezogenem Sonnenrollo durch die Heckscheibe sehen kann. Als Sonnen- und Blendschutzmittel in Kraftfahrzeugen angeordnete Rollos werden manuell oder elektromotorisch angetrieben, wobei manuell angetriebene Rollos üblicherweise nach Art eines zum Abdecken von Wohnungsfenstern eingesetzten Fensterrollos ausgebildet sind, das heißt eine auf einer Wickelwelle aufgewickelte Rollobahn aufweisen, die mit einem ersten Abschnitt mit der Wickelwelle und mit einem dem ersten Abschnitt gegenüberliegenden Abschnitt mit einem Zugspriegel verbunden ist, an dem ein Zugelement befestigt ist. Die Wickelwelle ist mit einer Drehfeder verbunden, die beim Abziehen der Rollobahn mittels des Zugelements gespannt wird, so dass beim Aufheben der auf das Zugelement einwirkenden Zugkraft die Rollobahn unter Einwirkung der gespannten Drehfeder wieder auf die Wickelwelle aufgewickelt wird.

Zum Arretieren der Rollobahn in gewünschten Abzugstellungen wird entweder der Zugspriegel in seitliche Hülsen eingehängt oder die Drehfeder mit einem Arretierungsmechanismus verbunden, der ein Aufwickeln der Rollobahn aus beliebigen Abzugsstellungen blockiert und erst nach nochmaligem kurzen Ziehen am Zugelement ein Aufwickeln der Rollobahn auf die Wickelwelle ermöglicht.

Alternativ kann zum Verstellen der Rollobahn eines Rollos für Kraftfahrzeuge eine Verstellvorrichtung eingesetzt werden, die ein mit dem Verstellteil gekoppeltes Zugmittel zum Übertragen einer Verstellkraft auf das Verstellteil und eine Bremseinrichtung zum Festlegen des Verstellteils in einer Verstellposition aufweist.

Derartige Verstelleinrichtungen können als manuell betätigbare oder elektrisch angetriebene Verstellvorrichtungen ausgebildet sein. Bei aus der US 2002/0046497 A1 und der DE 103 61 414 A1 bekannten Verstellvorrichtungen wird beispielsweise ein Zugmittel in Form eines eine geschlossene Seilschlaufe ausbildenden Seils über eine drehbar gelagerte Seiltrommel derart angetrieben, dass sich ein mit dem Seil gekoppelter Mitnehmer entlang einer Längsschiene zum Verstellen bewegt.

Aus der EP 1 123 824 A2 ist ein Sonnenschutzrollo für ein Kraftfahrzeug bekannt, das eine drehbar gelagerte Wickelwelle aufweist. Der Rolloantrieb besteht aus einer Antriebseinrichtung mit einem Antriebsmotor, einem Getriebe und mit dem Getriebe verbundenen druck- und verhältnismäßig biegesteifen zylindrischen Betätigungsgliedern, die in Führungsrohren geführt und mit dem Rollozugstab oder Spriegel verbunden sind.

Die Erfindung ist nicht auf bestimmte Verschiebe- und Abrolltechniken limitiert.

### Bezugszeichenliste

- 1: Dachelement
- 2: Fahrzeugdach
- 3: Sonnenschutz
- 4: Transparenter Bereich
- 5: Magnetmodule
- 6: Rolle
- 7: Metallische Bahn
- 8: Magnet
- 9: Längsschiene Dach
- 10: Spange
- 11: Anbindungen an Sonnenschutz
- 12: Befestigung Gleiter
- 13: Beschichtung

## Patentansprüche

1. Flexibles Sonnenschutzsystem, bestehend aus einem Fahrzeugdach (2), einem in dem Fahrzeugdach (2) befindlichen Dachelement (1) und einem unterhalb des Dachelements (1) angeordneten Sonnenrollo (3), wobei das Fahrzeugdach (2) zumindest Längsschienen (9) für die Führung des Sonnenrollos (3) aufweist, durch welche das Sonnenrollo (3) in Richtung der Fahrzeuglängsachse verschiebbar ist, wobei das Sonnenschutzsystem mindestens eine zusätzliche Führungsvorrichtung (5,7,8) zwischen den Längsschienen zur Führung des Sonnenrollos entlang der Längsachse des Fahrzeugs aufweist, **dadurch gekennzeichnet, dass** die zusätzliche entlang der Längsachse des Fahrzeugs verlaufende Führungsvorrichtung (5,7, 8) aus mindestens einer metallisierten und/oder metallischen Bahn (7) und Magneten (8) besteht, um hierdurch eine magnetische Verbindung zwischen Dachelement (1) und Sonnenrollo (3) herzustellen.

2. Flexibles Sonnenschutzsystem nach Anspruch 1, **dadurch gekennzeichnet, dass** die metallische Bahn (7) aus einem eingearbeiteten Metallstreifen oder einer aufgebrachten Metallschicht entweder im Dachelement (1) oder im Sonnenrollo (3) besteht.

3. Flexibles Sonnenschutzsystem nach einem der vorherigen Ansprüche, **dadurch gekennzeichnet, dass** die Magnete (8) entweder aufgebracht oder in das Material des Dachelements oder des Sonnenrollos integriert sind.

4. Flexibles Sonnenschutzsystem nach einem der vorherigen Ansprüche, **dadurch gekennzeichnet, dass** die zusätzliche Führungsvorrichtung (5,7,8) die Form des Sonnenrollos (3) mindestens teilweise an die Form des Dachelementes (1) anpasst.

5. Flexibles Sonnenschutzsystem nach einem der vorherigen Ansprüche, **dadurch gekennzeichnet, dass** das Dachelement (1) ein transparentes oder teilweise transparentes Dachelement, ein Glaselement oder ein Glasschiebedach, oder ein verschiebbares Verdeck, mit integrierten transparenten Flächen, ist.

6. Flexibles Sonnenschutzsystem nach einem der vorherigen Ansprüche, **dadurch gekennzeichnet, dass** das Sonnenrolle einen transparenten Einsatz (4) aufweist.

7. Flexibles Sonnenschutzsystem nach einem der vorherigen Ansprüche, **dadurch gekennzeichnet, dass** das Sonnenrollo (3) im offenen Zustand auf einer Rolle (6) aufgewickelt ist.

8. Flexibles Sonnenschutzsystem nach einem der vorherigen Ansprüche, **dadurch gekennzeichnet, dass** das Sonnenrollo (3) mindestens eine Spange (10) aufweist, die am frontscheibenseitigen Ende angebracht ist und in den Längsschienen (9) geführt ist.

9. Flexibles Sonnenschutzsystem nach einem der vorherigen Ansprüche, **dadurch gekennzeichnet, dass** das Sonnenrollo (3) manuell und/oder automatisch verschiebbar ist.

10. Flexibles Sonnenschutzsystem nach einem der vorherigen Ansprüche, **dadurch gekennzeichnet, dass** das Dachelement (1) an Kontaktstellen zum Sonnenrollo (3) eine Gleitbeschichtung (13) aufweist.

## Claims

1. Flexible sunshade system, consisting of a vehicle roof (2), a roof element (1) located in the vehicle roof (2) and a roller blind (3) arranged beneath the roof element (1), wherein the vehicle roof (2) has at least longitudinal rails (9) for guiding the roller blind (3) and by way of which the roller blind (3) can be displaced in the direction of the vehicle longitudinal axis, wherein the sunshade system has at least one additional guide device (5, 7, 8) between the longitudinal rails for guiding the roller blind along the longitudinal axis of the vehicle, **characterized in that** the additional guide device (5, 7, 8) running along the longitudinal axis of the vehicle consists of at least one metallized and/or metallic sheet (7) and magnets (8), in order in this way to produce a magnetic connection between the roof element (1) and the roller blind (3).

2. Flexible sunshade system according to Claim 1, **characterized in that** the metallic sheet (7) consists of an incorporated metal strip or an applied metal layer either in the roof element (1) or in the roller blind (3).

3. Flexible sunshade system according to either of the preceding claims, **characterized in that** the magnets (8) are either applied or integrated in the material of the roof element or of the roller blind.

4. Flexible sunshade system according to one of the preceding claims, **characterized in that** the additional guide device (5, 7, 8) adapts the form of the roller blind (3) at least partially to the form of the roof element (1).

5. Flexible sunshade system according to one of the preceding claims, **characterized in that** the roof element (1) is a transparent or partially transparent roof element, a glass element or a glass sliding roof, or a displaceable covering with integrated transparent areas.

6. Flexible sunshade system according to one of the preceding claims, **characterized in that** the roller blind has a transparent insert (4).

7. Flexible sunshade system according to one of the preceding claims, **characterized in that** the roller blind (3) in the open state is wound up on a roller (6) .

8. Flexible sunshade system according to one of the preceding claims, **characterized in that** the roller blind (3) has at least one bar (10), which is attached to the windscreen-side end and guided in the longitudinal rails (9).

9. Flexible sunshade system according to one of the preceding claims, **characterized in that** the roller blind (3) can be displaced manually and/or automatically.

10. Flexible sunshade system according to one of the preceding claims, **characterized in that** the roof element (1) has a sliding coating (13) at points of contact with the roller blind (3).

## Revendications

1. Système de pare-soleil flexible, constitué par un toit de véhicule (2), un élément de toit (1) se trouvant dans le toit de véhicule (2) et un pare-soleil à enrouleur (3) agencé en dessous de l'élément de toit (1), le toit de véhicule (2) comprenant au moins des rails longitudinaux (9) pour le guidage du pare-soleil à enrouleur (3), au moyen desquels le pare-soleil à enrouleur (3) peut être déplacé dans la direction de l'axe longitudinal du véhicule, le système de pare-soleil comprenant au moins un dispositif de guidage supplémentaire (5, 7, 8) entre les glissières longitudinales pour le guidage du pare-soleil à enrouleur le long de l'axe longitudinal du véhicule, **caractérisé en ce que** le dispositif de guidage supplémentaire (5, 7, 8) qui s'étend le long de l'axe longitudinal du véhicule est constitué par au moins une voie métallisée et/ou métallique (7) et des aimants (8), afin de créer une liaison magnétique entre l'élément de toit (1) et le pare-soleil à enrouleur (3) .

2. Système de pare-soleil flexible selon la revendication 1, **caractérisé en ce que** la voie métallique (7) est constituée par une bande métallique intégrée ou une couche métallique appliquée soit dans l'élément de toit (1), soit dans le pare-soleil à enrouleur (3).

3. Système de pare-soleil flexible selon l'une quelconque des revendications précédentes, **caractérisé en ce que** les aimants (8) sont soient appliqués, soit intégrés dans le matériau de l'élément de toit ou du pare-soleil à enrouleur.

4. Système de pare-soleil flexible selon l'une quelconque des revendications précédentes, **caractérisé en ce que** le dispositif de guidage supplémentaire (5, 7, 8) adapte la forme du pare-soleil à enrouleur (3) au moins en partie à la forme de l'élément de toit (1).

5. Système de pare-soleil flexible selon l'une quelconque des revendications précédentes, **caractérisé en ce que** l'élément de toit (1) est un élément de toit transparent ou partiellement transparent, un élément en verre ou un toit ouvrant en verre, ou une capote déplaçable, comprenant des surfaces transparentes intégrées.

6. Système de pare-soleil flexible selon l'une quelconque des revendications précédentes, **caractérisé en ce que** le pare-soleil à enrouleur comprend un insert transparent (4).

7. Système de pare-soleil flexible selon l'une quelconque des revendications précédentes, **caractérisé en ce que** le pare-soleil à enrouleur (3) est enroulé en un rouleau (6) à l'état ouvert.

8. Système de pare-soleil flexible selon l'une quelconque des revendications précédentes, **caractérisé en ce que** le pare-soleil à enrouleur (3) comprend au moins une agrafe (10), qui est disposée à l'extrémité côté pare-brise et est acheminée dans les glissières longitudinales (9).

9. Système de pare-soleil flexible selon l'une quelconque des revendications précédentes, **caractérisé en ce que** le pare-soleil à enrouleur (3) peut être déplacé manuellement et/ou automatiquement.

10. Système de pare-soleil flexible selon l'une quelconque des revendications précédentes, **caractérisé en ce que** l'élément de toit (1) comprend un revêtement de glissement (13) aux emplacements de contact avec le pare-soleil à enrouleur (3).
